# EUROPEAN PATENT APPLICATION

(11) **EP 1 624 548 A2**
(43) Date of publication of application: **08.02.2006**
(21) Application number: 04021483.5
(22) Date of filing: 09.09.2004
(51) Int. Cl.: H02K 5/22

(54) **Output terminal assembly of alternator for vehicle**

(30) Priority: 06.07.2004 KR 2004052203
(71) Applicant: VALEO ELECTRICAL SYSTEMS KOREA LTD., Kyongju-si, Kyongsangbuk-do (KR)
(72) Inventor: Lee, Hyun-Cheol, Daegu-si,701-120 (KR); Lee, Kyeong-Hyeong, Kyongju-si,Kyongsangbuk-do,780-130 (KR)
(74) Representative: TER MEER - STEINMEISTER & PARTNER GbR

(57) **Abstract**

The present invention relates to an improved output terminal assembly of an alternator for a vehicle capable of increasing of a contact area and preventing a damage of a sealing member and decreasing an error during a fabrication. The output terminal includes an axial direction terminal, and a radius direction output terminal, wherein the axial direction output terminal includes a head part, an extension part, a body part, and a thread part, and the radius direction output terminal includes an exposure part, an assembling hole, and an insulation mold; and wherein the extension part of the axial direction output terminal is inserted into an assembling hole of the radius direction output terminal, and the thread part of the axial direction output terminal is inserted from the outer side of the rear bracket to the inner side of the same for thereby being fixed using a nut.

## Description

### BACKGROUND OF THE INVENTION

### 1. Field of the Invention

The present invention relates to an output terminal assembly of an alternator for a vehicle, and in particular to an improved output terminal assembly of an alternator for a vehicle capable of increasing of a contact area in order that a current density per unit area may be decreased and preventing a damage of a sealing member and decreasing an error during a fabrication by improving an assembling performance in such a manner that a contact structure between an axial direction output terminal and a radial direction output terminal is improved.

### 2. Description of the Background Art

Generally, a vehicle alternator includes a casing 30 that is formed of a rear bracket 10 having a shaft support part 11 and a front bracket 20, a shaft 60 that is installed in the interior of the casing wherein a pulley 40 is fixed to one end of the shaft 60, a rotor 70 fixed to the shaft, a fan 71 fixed to both sides of the rotor, a stator 50 fixed to an inner wall surface of the casing, a slip ring 52 that is fixed to the other end of the shaft for supplying current to the rotor, a pair of brushes 81 that contact with the slip ring, a brush assembly 80 that receives the brush, a rectifier assembly 90 that is electrically connected with the stator, a heat sink 91 that is engaged to the brush assembly, and a regulator 92 that is connected with the heat sink for adjusting the size of an alternating current voltage generated by the stator.

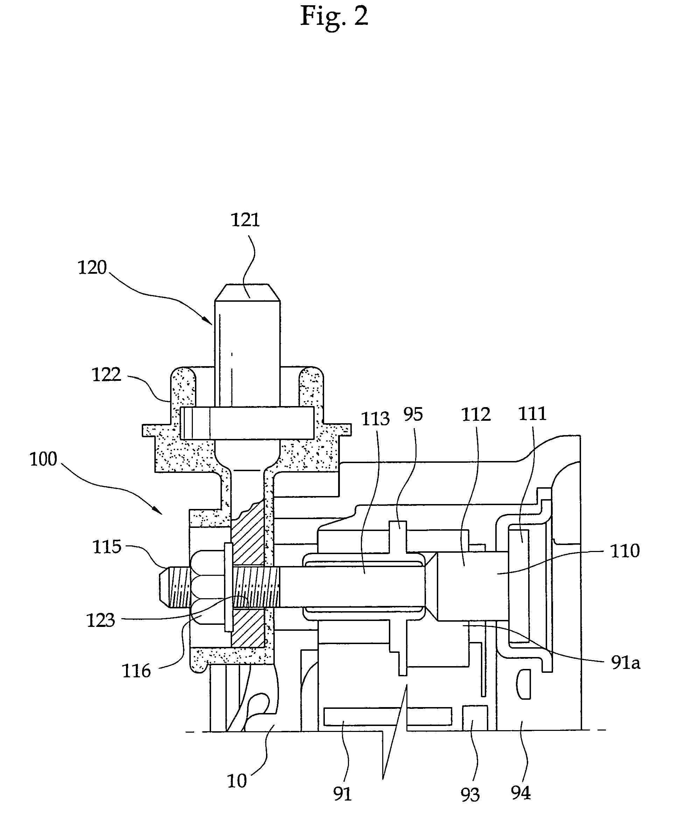

In addition, as shown in Figure 2, there is further provided an output terminal 100 in order to output the current generated based on the rotor 70 and the stator 50 to the outside.

At this time, the output terminal 100 is formed of an axial direction output terminal 110, and a radius direction output terminal 120 connected from an outer portion of the same. Here, the axial direction output terminal 110 includes a bolt head-shaped head part 111 and an extension part 112, a body part 113, and a thread part 115 formed at an end of the same. The radius direction output terminal 120 includes an assembling hole 123 inserted onto the thread part 115, an exposure part 121 formed in the opposite portion of the same, and an insulation mold 122 that surrounds the above elements.

When assembling the above elements, the thread part 115 of the axial direction output terminal 110 sequentially passes through a plate 94, a circuit board 93, an insulation pipe 95, and a heat sink 91 in an inner side of the bracket 10 and is exposed to the outside of the bracket 10. The assembling hole 123 of the radius direction output terminal 120 surrounded by the insulation mold 122 is inserted onto the thread part 115 and is engaged using a nut 116.

However, when assembling the conventional output terminal assembly to the alternator, it is assembled after all the elements including the rear bracket 10 are assembled. Therefore, the following problems may occur.

Namely, since the axial direction output terminal 110 is assembled in a direction from the inner side of the rear bracket 10 to the outside, the thread part 115 of the end of the same has less diameter as compared to the extension part 112 and the head part 111. Therefore, the contacting area is small when being assembled with the radius direction output terminal 120.

Therefore, the heat is more increased when a large amount of current flows, and the reliability of the product is damaged by an incomplete contact.

It may be needed to increase the contact area by increasing the diameter of the thread part 115. However, in this case, it is needed to increase the size of the terminal assembling hole 123 including other parts such as the heat sink 91, then, the larger terminal assembling hole 123 may weaken the strength of the heat sink. Therefore, it is impossible to actually implement the above construction.

When assembling the radius direction output terminal 120, since the thread part 115 of the axial direction output terminal 110 is tightly inserted into the assembling hole 123, a larger force is needed. The insulation mold 122 may be damaged when assembling the same using the larger force.

In addition, the axial direction output terminal 110 for a desired contact between the terminal of the circuit board and the heat sink 91 may be inwardly pushed in the inner space of the bracket 10 by an assembling force, therefore a certain error may occur in the contact.

### SUMMARY OF THE INVENTION

Accordingly, it is an object of the present invention to overcome the problems encountered in the conventional art.

It is another object of the present invention to an output terminal assembly of an alternator for a vehicle capable of increasing a contacting area with a radius direction output terminal without enlarging the hole of a heat sink in such a manner that a head part of an axial direction output terminal is positioned outside a rear bracket.

It is further another object of the present invention to provide an output terminal assembly of an alternator for a vehicle capable of preventing any damage of an insulation mold by removing a tight insertion in such a manner that a radius direction output terminal is assembled with an axial direction output terminal before the axial direction output terminal is assembled with a bracket.

It is still further another object of the present invention to provide an output terminal assembly of an alternator for a vehicle capable of enhancing an assembling performance in such a manner that an assembling of a radius direction output terminal is performed only in one direction outside the bracket.

To achieve the above objects, in an alternator that includes a casing formed of a rear bracket and a front bracket, a rotor fixed to the shaft in the interior of the casing, a stator fixed to an inner wall surface of the casing, a brush assembly, a rectifier assembly, a heat sink and a regulator, there is provided an output terminal assembly of an alternator for a vehicle, comprising an output terminal that includes an axial direction terminal engaged to the heat sink provided in an inner side of the rear bracket for outputting power to the outside, and a radius direction output terminal, wherein the axial direction output terminal includes a head part, an extension part, a body part, and a thread part formed at one end, and the radius direction output terminal includes an exposure part of an outer side end, an assembling hole formed at an inner end, and an insulation mold that covers the above elements; and wherein the extension part of the axial direction output terminal is inserted into an assembling hole of the radius direction output terminal, and the thread part of the axial direction output terminal is inserted from the outer side of the rear bracket to the inner side of the rear bracket for thereby being fixed using a nut.

To achieve the above objects, in an alternator that includes a casing formed of a rear bracket and a front bracket, a rotor fixed to the shaft in the interior of the casing, a stator fixed to an inner wall surface of the casing, a brush assembly, a rectifier assembly, a heat sink and a regulator, there is provided an output terminal assembly of an alternator for a vehicle, comprising an output terminal that includes an axial direction terminal engaged to the heat sink provided in an inner side of the rear bracket for outputting power to the outside, and a radius direction output terminal, wherein the axial direction output terminal includes a head part, an extension part, a body part, and a thread part at one end, and the radius direction output terminal includes an exposure part at an outer end, and an assembling hole substantially larger for inserting the extension part; and wherein a body part of the radius direction output terminal and the head part of the axial direction output terminal are covered by an insulation mold in a state that the extension part of the axial direction terminal is inserted into the assembling hole of the radius direction output terminal; and wherein the thread part of the axial direction output terminal is inserted from the outer side of the rear bracket to the inner side of the rear bracket for thereby being fixed using a nut.

### BRIEF DESCRIPTION OF THE DRAWINGS

The present invention will become better understood with reference to the accompanying drawings which are given only by way of illustration and thus are not limitative of the present invention, wherein;
Figure 1 is a cross sectional view illustrating the construction of an alternator in a conventional art;
Figure 2 is a cross sectional illustrating a conventional output terminal assembly;
Figure 3 is a disassembled cross sectional view illustrating an output terminal assembly according to an embodiment of the present invention;
Figure 4 is a cross sectional view illustrating an assembled state of an output terminal assembly according to the present invention; and
Figure 5 is a cross sectional view illustrating an output terminal assembly for a vehicle according to another embodiment of the present invention.

### DETAILED DESCRIPTION OF THE PREFERRED EMBODIMENTS

The construction and operation of the present invention will be described with reference to the accompanying drawings.

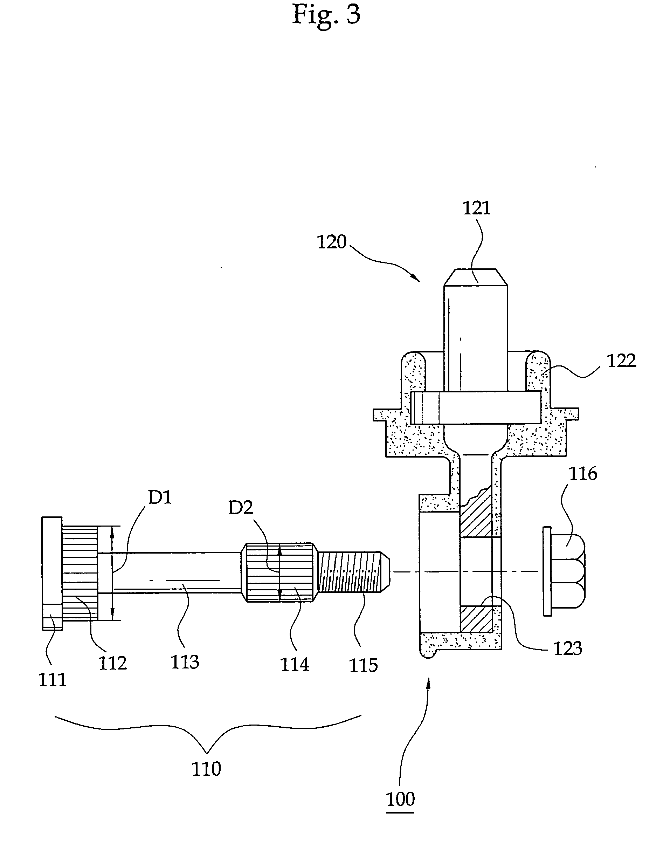

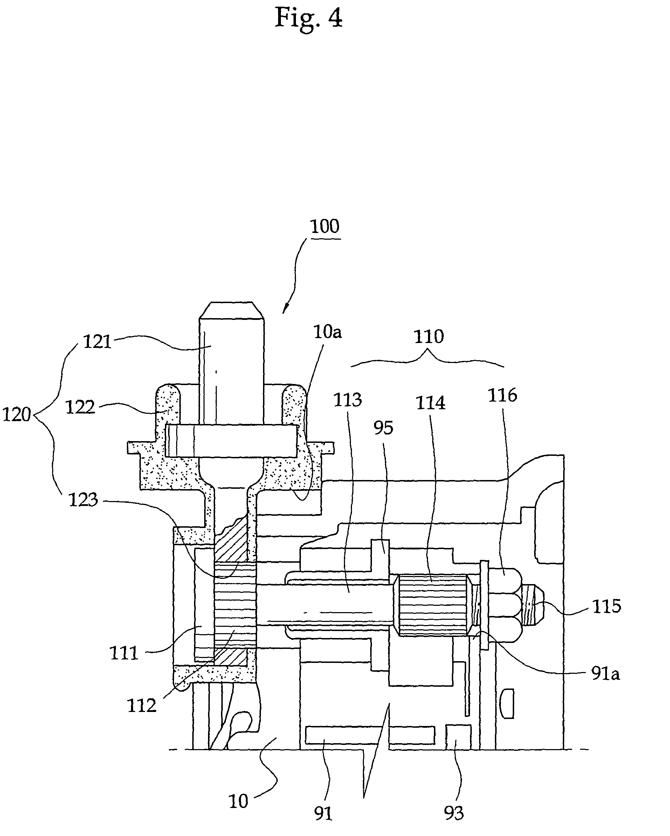

Figure 3 is a disassembled cross sectional view illustrating an output terminal assembly according to an embodiment of the present invention, and Figure 4 is a cross sectional view illustrating an assembled state of an output terminal assembly according to the present invention.

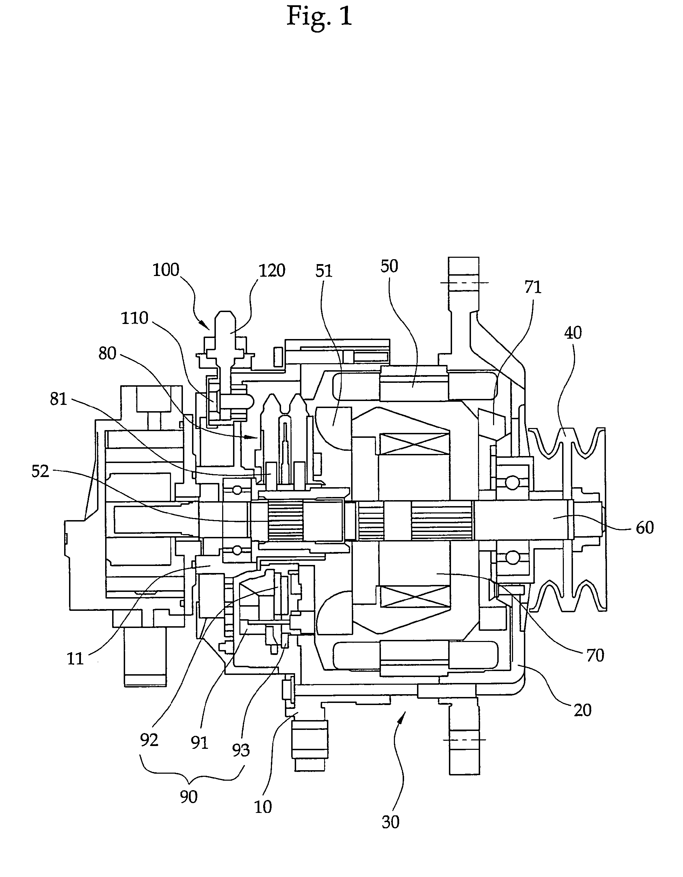

As shown in Figure 1, the alternator includes a casing 30 formed of a rear bracket 10 and a front bracket 20, a rotor 70 fixed to a shaft 60 in the interior of the casing, a stator 50 fixed to an inner wall surface of the casing, a brush assembly 80, a rectifier assembly 90, a heat sink 91, and a regulator 92.

The output terminal 100 engaged with the heat 91 provided in the inner side of the rear bracket 10 for outputting power to the outside includes an axial direction output terminal 110, and a radius direction output terminal 120.

Here, the axial direction output terminal 110 includes a head part 111, an extension part 112, a body part 113, and a thread part 115 formed at one end of the same. The radius direction output terminal 120 includes an exposure part 121, an assembling hole 123 provided in the inner side of the exposure part 121 and formed in a large size for thereby inserting the extension part 112, and an insulation mold 112 that surrounds the above elements.

When assembling the above elements, the extension part 112 of the axial direction output terminal 110 is inserted into the assembling hole 123 of the radius direction output terminal 120, and the thread part 115 of the axial direction output terminal 110 is inserted from the outer side of the rear bracket 10 to the inner direction of the rear bracket 10 for thereby being fixed by a nut 116.

At this time, the axial direction output terminal 110 includes the extension part 112 of the lower side of the head part, and a body part 113. In addition, the axial direction output terminal 110 further includes a heat sink contact part 114 at an intermediate portion.

The diameter D1 of the extension part 112 and the diameter D2 of the heat sink contact part 114 are D2/D1 ≥ 0.70.

Namely, the diameter of the extension part 112 is larger than the diameter of the heat sink contact part 114.

The rear bracket 10 has an assembling guide surface 10a in one side, and the exposure part 121 of the radius direction output terminal 120 contacts with the assembling guide surface 10a.

Therefore, a uniform assembling direction is achieved in the radius direction output terminal 120.

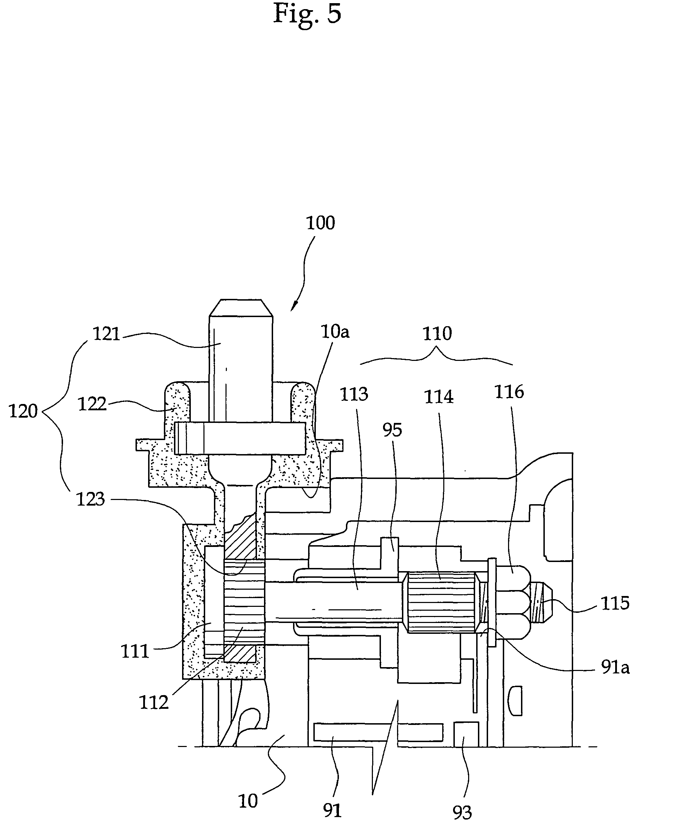

In the present invention, as shown in Figure 5, the insulation mold 122 could be implemented in another method.

The output terminal 100 includes an axial direction output terminal 110 engaged with a heat sink 91 provided in the inner side of the rear bracket 10 for outputting power to the outside, and a radius direction output terminal 120. Here, the axial direction output terminal 110 includes a head part 111, an extension part 112, a body part 113, and a thread part 115 formed at one end. In addition, the radius direction output terminal 120 includes an exposure part 121 of an outer end, and an assembling hole 123 that is formed at an inner end of the opposite side for thereby inserting the extension part 112 thereinto.

In a state that the extension part 112 of the axial direction output terminal 110 is inserted into the assembling hole 123 of the radius direction output terminal 120, the insulation mold 122 surrounds the body part of the radius direction output terminal 120 and the head part 111 of the axial direction output terminal 110.

The thread part 115 of the axial direction output terminal 110 is inserted from the outer side of the rear bracket 10 to the inner side of the rear bracket 10 for thereby being fixed using a nut 116.

In the present invention, it is not needed to provide a cap on the axial direction output terminal 110 like in the conventional art.

In the present invention, since the axial direction output terminal 110 and the radius output terminal 120 are first assembled, an over force is not provided when assembling the radius direction output terminal 120 to the axial direction output terminal 110.

In addition, since the axial direction output terminal 110 is inserted from the outer side of the rear bracket 10 to the inner direction of the rear bracket 10, the assembling of the output terminal is finished before the rear bracket 10 is assembled to the alternator.

As described above, in the present invention, since the head part of the axial direction output terminal is provided outside the rear bracket, it is possible to increase the contact area with respect to the radius direction output terminal without making the terminal hole of the heat sink larger.

In addition, the radius direction output terminal is assembled with the axial direction output terminal before they are assembled with the bracket. Therefore, it is possible to assembly without a tight insertion, so that the insulation mold is not damaged.

When assembling the radius direction output terminal, since an assembling guide surface is formed on an outer surface of the bracket, the radius direction output terminal is always assembled in one direction for thereby enhancing an assembling performance.

In addition, as shown in Figure 5, since the insulation mold is covered in a state that the axial direction output terminal and the radius direction output terminal are assembled, two parts may be integrated to one part. Therefore, an easier handling and assembling productivity are enhanced. Since it is possible to prevent moisture and foreign substances from being inserted into the terminal contact parts, the life span of the output terminal assembly could be extended.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. An alternator that includes a casing formed of a rear bracket and a front bracket, a rotor fixed to the shaft in the interior of the casing, a stator fixed to an inner wall surface of the casing, a brush assembly, a rectifier assembly, a heat sink and a regulator, an output terminal assembly of an alternator for a vehicle, comprising:
an output terminal that includes an axial direction terminal engaged to the heat sink provided in an inner side of the rear bracket for outputting power to the outside, and a radius direction output terminal,
wherein said axial direction output terminal includes a head part, an extension part, a body part, and a thread part formed at one end, and said radius direction output terminal includes an exposure part of an outer side end, an assembling hole formed at an inner end of the opposite side, and an insulation mold that covers the above elements; and
wherein the extension part of the axial direction output terminal is inserted into an assembling hole of the radius direction output terminal, and the thread part of the axial direction output terminal is inserted from the outer side of the rear bracket to the inner side of the rear bracket for thereby being fixed using a nut.

2. The assembly of claim 1, wherein said axial direction output terminal includes a heat sink contact part at an intermediate portion of the extension part in a lower side of the head part and the body part, and the diameter D1 of the extension part and the diameter D2 of the heat sink contact part are D2/D1 ≥ 0.70.

3. The assembly of claim 1, wherein said rear bracket includes an assembling guide surface so that the exposure part of the radius direction output terminal is assembled with a certain direction.

4. An alternator that includes a casing formed of a rear bracket and a front bracket, a rotor fixed to the shaft in the interior of the casing, a stator fixed to an inner wall surface of the casing, a brush assembly, a rectifier assembly, a heat sink and a regulator, an output terminal assembly of an alternator for a vehicle, comprising:
an output terminal that includes an axial direction terminal engaged to the heat sink provided in an inner side of the rear bracket for outputting power to the outside, and a radius direction output terminal,
wherein said axial direction output terminal includes a head part, an extension part, a body part, and a thread part at one end, and said radius direction output terminal includes an exposure part at an outer end, and an assembling hole substantially larger for inserting the extension part at an inner end of the opposite side; and
wherein a body part of the radius direction output terminal and the head part of the axial direction output terminal are covered by an insulation mold in a state that the extension part of the axial direction terminal is inserted into the assembling hole of the radius direction output terminal; and
wherein the thread part of the axial direction output terminal is inserted from the outer side of the rear bracket to the inner side of the rear bracket for thereby being fixed using a nut.
